# EUROPÄISCHE PATENTSCHRIFT

(11) **EP 1 450 223 B1**
(45) Veröffentlichungstag und Bekanntmachung des Hinweises auf die Patenterteilung: **09.11.2005**
(21) Anmeldenummer: 04003575.0
(22) Anmeldetag: 18.02.2004
(51) Int. Cl.: G05B 19/042

(54) **Universeller konfigurierbarer Schnittstellenschaltkreis für E/A-Ankopplungen zu einem Prozess**
Universal configurable interface circuit for I/O interfacing to a process
Circuit d'interface universel configurable pour formé l'interface d'entrée/sortie d'un processus

(30) Priorität: 24.02.2003 DE 10308027
(43) Veröffentlichungstag der Anmeldung: 25.08.2004
(73) Patentinhaber: Brinkhus, Hartmut B., Dr., 69126 Heidelberg (DE)
(72) Erfinder: Brinkhus, Hartmut B., Dr., 69126 Heidelberg (DE)
(74) Vertreter: von Bülow, Tam

(56) Entgegenhaltungen:
- US-A- 4 870 564
- US-A- 4 910 659
- US-A- 4 951 250

## Beschreibung

Die Erfindung bezieht sich auf einen Schnittstellenschaltkreis für Prozeßankopplungen. Bei industriellen Anwendungen müssen Daten, Meßwerte, Steuersignale und ähnliches an einen Computer oder vom Computer zurück an Maschinen und Geräte übertragen werden. Bei komplexeren Anwendungen werden sehr viele Schnittstellenschaltkreise benötigt, die bis zu mehreren Tausend gehen können. Der mit der Industrieumgebung kommunizierende Anschluß der Schnittstellenschaltkreise wird allgemein und auch im folgenden als I/O-Pin bezeichnet.

Grundsätzlich ist die Funktion eines I/O-Pins festgelegt durch:
a) seine physikalischen Eigenschaften,
b) durch vor- oder nachgeschaltete, höhere Systemfunktionen und
c) durch Hilfsfunktionen.

Die physikalischen Eigenschaften werden üblicherweise durch einen integrierten Schaltkreis , der den I/O-Pin zur Verfügung stellt und gegebenenfalls durch dessen externe Beschaltung bestimmt.

So wird beispielsweise ein analoger Eingang durch seine Eigenschaft als Eingang für Spannungen oder Strom, also analoge Signale, definiert. Es kommen weitere Eigenschaften hinzu, wie Eingangsimpedanz, Eingangsbereich, Einschwingverhalten, Überspannungsfestigkeit, etc.

Seine Systemfunktion wird durch Analog-Digital-Wandler, ggf. analoge oder digitale Filter, Ablaufsteuerungen, Auswertungen etc., bestimmt. Für diese Funktionen und deren Aufteilung auf vorhandene Systemkomponenten kann man verschiedene Arten der Realisierung wählen.

Mit Hilfsfunktionen sind die Stromversorgung, der Anschluß des I/O-Pins an den Prozeß, der Anschluß der übergeordneten Systeme, z.B. über einen Feldbus, und die mechanischen Eigenschaften gemeint.

Bisher übliche Lösungen verwenden zur Realisierung unterschiedlicher Typen von I/O-Pins austauschbare Baugruppen, in denen die physikalischen Eigenschaften der I/O-Pins festgelegt sind. Zusammen mit den Hilfsfunktionen sind sie in das sog. Front-End integriert. Höhere Systemfunktionen fehlen hier meistens.

Bisher werden für jede spezifische Art von I/O-Pins unterschiedliche Baugruppen gefertigt, in denen jeweils die geforderten Eigenschaften und insbesondere die physikalischen Eigenschaften realisiert sind. Dies bedeutet, daß eine enorme Vielzahl unterschiedlicher Schnittstellenschaltkreise gefertigt, montiert und für Störungsfälle auf Lager gehalten werden muß. Üblicherweise sind die Schnittstellenschaltkreise als steckbare Module ausgebildet, die identische Anordnungen von Anschlußbeinchen haben, so daß es bei der Montage leicht zu Verwechslungen kommt, was eine Fehlerquelle darstellt.

Ein Beispiel sind SPS-Systeme wie z.B. S7 der Firma Siemens. Das Front-End wird als "dezentrale Peripherie" bezeichnet und besteht dort aus zwei mechanisch und elektrisch getrennten Baugruppen, die aufeinander gesteckt werden. Dabei befinden sich die Hilfsfunktionen in einer universell einsetzbaren Basisbaugruppe. Typ und Anzahl der I/O-Pins wird über eine darauf aufsteckbare, zweite Baugruppe festgelegt, von der viele unterschiedliche Typen verfügbar sind. Die aktuellen Zustände der I/O-Pins werden zur Basisbaugruppe und dann über einen Feldbusanschluß an ein zentrales Rechnersystem übertragen. Dort können dann auch höhere Systemfunktionen in Software realisiert werden.

Ein anderes Beispiel sind Schraubklemmen der Firma Wago. Hier werden kleine Einheiten, wie auf einer Perlenkette aufgereiht, aneinander gesteckt. Jedes Element enthält nur einen oder wenige I/O-Pins mit den Schraubklemmen zum Prozeß hin. Stromversorgung und Anschluß an ein übergeordnetes Feldbussystem sind in separaten Elementen angeordnet. Dort werden dann auch Systemfunktionen realisiert.

Aus der Patentschrift US4870564 sind Schnittstellenschaltkreise für Prozessankopplungen bekannt, die es erlauben jeden I/O-Pin selektiv als Eingang oder als Ausgang zu konfigurieren.

Aufgabe der Erfindung ist es, die bekannten Schnittstellenschaltkreise für Prozeßankopplungen dahingehend zu verbessern, daß ein universeller Schnittstellenschaltkreis geschaffen wird, dessen Eigenschaften für alle gängigen Anforderungen programmierbar sind.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung liegt in einem universellen programmierbaren Schnittstellenschaltkreis, der eine Vielzahl von programm-steuerbaren Schaltern aufweist sowie eine Vielzahl zur Realisierung physikalischer Eigenschaften benötigter Baugruppen, wobei je nach Schaltzustand der Schalter unterschiedliche Funktionen auswählbar sind. Allgemein gesprochen sind die physikalischen Eigenschaften jedes I/O-Pins programmierbar, womit jeder I/O-Pin die verschiedensten Funktionen als digitaler oder analoger Ein- oder Ausgang übernehmen kann.

Die Ansteuerung des Schnittstellenschaltkreises erfolgt über eine Logikschallung, beispielsweise ein FPGA (Field Programmable Gate Array) oder einen ASIC, die vorzugsweise galvanisch getrennt, beispielsweise über einen Optokoppler miteinander verbunden sind.

Nur die unbedingt erforderlichen Funktionselemente befinden sich im Schnittstellenschaltkreis-Chip direkt am I/O-Pin auf der galvanisch getrennten Seite, alle anderen Funktionen, insbesondere auch Systemfunktionen bzw. "höhere Funktionen", sind auf der anderen Seite der Trennung realisiert (im folgenden FPGA-Seite genannt, weil die Ansteuerung z.Zt. durch ein FPGA = Field Programmable Gate Array erfolgt). Damit können mit ein- und derselben Hardware-Elektronik praktisch alle geforderten Prozeßfunktionen realisiert werden. Die Grenze zwischen einfachen und höheren Systemfunktionen ist zwar fließend. Einfache Systemfunktionen erfordern in der Regel aber keine Logikoperation und können beispielsweise bei einem als digitaler Eingang geschalteten I/O-Pin eine Interrupt-Auslösung oder das Zählen von Ereignissen, wie z.B. von positiven Flanken, sein. Höhere Systemfunktionen erfordern dagegen komplexere Logikfunktionen und können beispielsweise die Messung der Pulsbreite oder Periodendauer sein, das Auszählen von Impulsen einer Referenzfrequenz zwischen einer positiven und der nächsten negativen Flanke am I/O-Pin bzw. zwischen zwei aufeinanderfolgenden positiven Flanken. Auch die Messung von Drehzahlen zählt zu den höheren Funktionen. Zur Erhöhung der Meßgenauigkeit kann man zusätzlich die Meßmethode dynamisch im Betrieb zwischen dem Zählen von Impulsen pro Zeiteinheit (geeignet für hohe Drehzahlen) und der Pulsbreiten- oder Periodendauermessung (geeignet für niedrige Drehzahlen) umschalten. Auch die Erkennung einer Drehzahl = 0 ist genau genommen das Fehlen einer weiteren Flanke am I/O-Pin und könnte durch Überschreiten einer programmierbaren Zeitbegrenzung erkannt werden. Diese höheren Systemfunktionen, die in vielen Fällen auch durch Software realisiert sind, sind stets auf der FPGA-Seite lokalisiert, um dem Schnittstellenschaltkreis-Chip einen einfachen und universell einsetzbaren Aufbau zu geben.

Einige Funktionen ergeben sich erst durch das sinnvolle Zusammenspiel von Schnittstellenschaltkreis-Seite und FPGA-Seite. Die Ansteuerung des Schnittstellenschaltkreis-Chips geschieht z.B. synchron seriell über je eine Datenleitung pro Richtung. Damit ist eine starre zeitliche Koppelung zwischen dem Schnittstellenschaltkreis-Chip und der Ansteuerschaltung gegeben. Dies wird für eine Reihe von Funktionen ausgenutzt und bringt einige Vorteile, auf die in der folgenden Beschreibung jeweils hingewiesen wird.

Ein weiterer Vorteil des neuen Schnittstellenschaltkreises ist, daß für alle Typen von I/O-Pins und alle Funktionen dieselbe Hardware verwendet werden kann. Dadurch vereinfacht sich der Aufbau von Steuerungssystemen und Schaltschränken erheblich, ebenso die Ersatzteilhaltung und der Wartungsaufwand. Im einfachsten Falle werden zusätzliche Schnittstellenschaltkreise im System vorgehalten, die erst bei Bedarf, also z.B. bei Defekt anderer Pins, aktiviert werden. Einfaches Umprogrammieren genügt. Redundante Systeme werden damit ebenfalls sehr einfach realisierbar.

Die Energieversorgung des Schnittstellenschaltkreis-Chips erfolgt z.B. über einen DC/DC-Wandler mit einem Energieübertrager wie zB einem Transformator. Die Sekundärseite des Transformators wird direkt an den Schnittstellenschaltkreis-Chip angeschlossen. Die Erzeugung aller erforderlichen Versorgungsspannungen inkl. Gleichrichtung und Filterung können im Schnittstellenschaltkreis-Chip integriert sein.

Die bei der oben genannten galvanischen Trennung des Schnittstellenschaltkreis-Chips erforderlichen beiden galvanisch getrennten Datenleitungen (durch Opto- oder Magnetokoppler) könnten ebenfalls noch eingespart werden, wenn dies z.B. durch den bei der DC/DC-Wandlung verwendeten Energieübertrager mit erledigt wird.

### Physikalische Eigenschaften der I/O-Pin s

Als physikalische Eigenschaften der I/O-Pins können programmiert werden:
- Ein- oder Ausgang
- digital oder analog
- Spannung oder Strom
- Zuschaltbare Widerstände (Busabschluß, Fail-Safe).

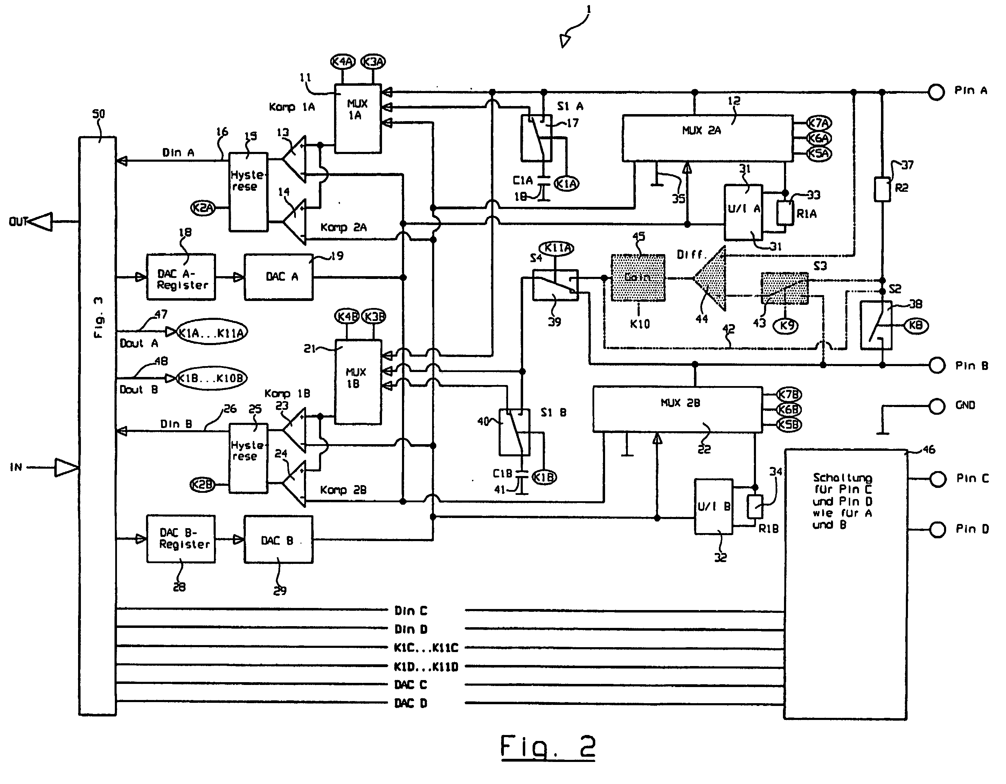

Daraus ergeben sich z.B. folgende mögliche Grundfunktionen unter Verwendung von ein oder zwei I/O-Pins für die jeweilige Funktion (siehe Fig. 2) :
- Digitaler Eingang mit programmierbarer Schaltschwelle und Hysterese, z.B. für Logikpegel, RS-232, etc.
- Digitaler Differenz-Eingang, z.B. für RS-422 bzw. RS-485
- Digitaler Ausgang Typ PP (Push-Pull) : Low-Pegel < 0,4 Volt, High-Pegel programmierbar
- Digitaler Ausgang Typ LH: programmierbarer Low und High-Pegel, programmierbare Slew Rate, z.B. auch für RS-232
- Digitaler Ausgang Typ OD (= Open Drain)
- Digitaler Differenz-Ausgang, z.B. für RS-485
- Analoger Masse-bezogener Spannungseingang, programmierbarer Eingangsbereich (optional)
- Analoger Differenz-Eingang für Spannung
- Analoger Differenz-Eingang für 0..20mA bzw. 4..20mA
- Analoger Spannungs-Ausgang, z.B. +/-10V
- Analoger Konstantstrom-Ausgang für 0..20mA bzw. 4..20mA.

Bei dem weiter unten im Detail beschriebenen Ausführungsbeispiel des Schnittstellenschaltkreis-Chips erhalten bei vielen der oben erwähnten Grundfunktionen je zwei I/O-Pins dieselben Eigenschaften. Bei Konfiguration als digitale Eingänge z.B. nutzen je zwei I/O-Pins dieselben Einstellungen der beiden zugehörigen DACs (DAC = Digital Analog Converter), weil je I/O-Pin nur ein DAC vorgesehen ist. Mit einem DAC wird die obere Schaltschwelle (Low >> High) und mit dem anderen die Hysterese bzw. eine untere Schaltschwelle eingestellt. Bei digitalen Ausgängen wird der zum jeweiligen I/O-Pin zugehörige DAC zur Einstellung des High-Pegels, der andere ggf. für den Low-Pegel verwendet. Bei einem digitalen Ausgang mit Open Kollektor bzw. Open Drain wird der zum jeweiligen I/O-Pin zugehörige DAC nicht benutzt, denkbar wäre die Nutzung zur Einstellung einer Schwelle, um einen Überstrom bei Ausgangspegel = Low zu entdecken.

Zwei I/O-Pins können auch als Differenzeingang zusammengeschaltet werden, z.B. als:
- analoger Differenzeingang für Spannungen
- digitaler Differenzeingang, z.B. für RS-422 oder RS-485
- analoger Stromeingang (0..20mA).

### Systemfunktionen

Für die den I/O-Pins nachgeschalteten Systemfunktionen sind ausschließlich digitale Funktionen erforderlich, die sinnvollerweise auf der galvanisch nicht getrennten Seite, z.B. in einem ASIC (= Application Specific Integrated Circuit) oder FPGA (= Field Programmable Gate Array), realisiert werden können. Es sind auch FPGAs verfügbar, bei denen im laufenden System nur Teile des FPGAs umprogrammiert werden können, die übrigen Teile aber voll funktionsfähig bleiben. Dadurch können die Systemkosten drastisch gesenkt werden, weil auch im FPGA je I/O-Pin nur eine bestimmte Anzahl Gatter vorgehalten werden muß. Die Funktion der I/O-Pins kann erst zum Zeitpunkt der Konfiguration des Gesamtsystems nach Montage vor Ort festgelegt werden.

Für digitale Eingänge sind z.B. folgende Systemfunktionen möglich:
- Interrupt auslösen
- Not-Aus
- asynchrone oder synchrone serielle Schnittstelle
- Modem-Steuerleitungen
- synchron-serielle Schnittstelle (= SSI) für den Anschluß von Drehgebem
- Zähler
- Frequenzmessung
- Pulsbreitenmessung
- Periodendauermessung
- Inkrementalgeberinterface, verschiedene Modes.

Jeder Eingang ist prinzipiell ein analoger Eingang, auch wenn das vom Schnittstellenschaltkreis-Chip gelieferte Ergebnis des Komparators digital ist. Durch die Art der Weiterverarbeitung im FPGA kann sehr einfach ein Analog-Digital-Wandler je I/O-Pin realisiert werden (s.u.) . Mit dem Ergebnis der AD-Wandlung sind dann z.B. weitere Systemfunktionen möglich:
1) Interrupt bei Über- und/oder Unterschreiten
2) simultanes Abtasten mehrerer analoger Eingänge
3) Sensor-Signalaufbereitung (Pt100, Thermoelement, DMS, etc.). Für die Brückenspeisung kann z.B. ein weiterer Schnittstellenschaltkreis-Pin, der als Konstantstromausgang konfiguriert wird, eingesetzt werden (2-, 3-, oder 4-Draht-Konfiguration möglich).

Für digitale Ausgänge sind z.B. folgende Systemfunktionen möglich:
1) Frequenzausgang
2) pulsweitenmodulierter Ausgang (PWM), z.B. für DC-Motoren
3) Schrittmotoransteuerung
4) asynchrone oder synchrone serielle Schnittstelle
5) Modem-Steuerleitungen
6) synchron-serielle Schnittstelle (= SSI) zur Emulation von Drehgebem

Für einen analogen Ausgang sind z.B. folgende Systemfunktionen möglich:

Ausgabe kompletter analoger Signalformen (z.B. Sinus, freie Funktion, etc.)

### Realisierung

Es wurde von der Annahme ausgegangen, daß in den meisten Systemen (SPS oder Schaltschränke für Prüfstände, Qualitätskontrolle, o.ä.) viele I/O-Pins erforderlich sind, zum Teil mehrere Hundert oder Tausend. Meistens ist auch eine galvanische Trennung wünschenswert oder gefordert. Oft haben einige I/O-Pins dieselben Eigenschaften und müssen untereinander auch nicht galvanisch getrennt sein.
Je Schnittstellenschaltkreis-Chip sind ein Transformator für den DC/DC-Wandler (zur Versorgung des Schnittstellenschaltkreis-Chips) und zwei digitale Kommunikationskanäle (für jede Richtung einer) vorgesehen. Um die Kosten gering zu halten, wurde die Zahl der I/O-Pins pro Schnittstellenschaltkreis-Chip auf 4 festgelegt. Auf die prinzipielle Funktion des Schnittstellenschaltkreis-Chips hat das keine Auswirkungen. Zusätzlich wurde auch die Möglichkeit einer Kaskadierung von Schnittstellenschaltkreis-Chips vorgesehen.

| Vor- und Nachteile der Anzahl der I/O-Pins pro Schnittstellenschaltkreis-Chip | | |
|---|---|---|
| I/O-Pins/Chip | Vor- und Nachteile | Kosten/Pin |
| 1 + GND | Galvan. Trennung je Pin | hoch |
| 2 + GND | Diff.-Eingang, hohe Granularität | mittel |
| 3 + GND | Diff.-Eingang, hohe Granularität | mittel |
| 4 + GND + Kaskadierung | bester Kompromiß | niedrig |
| 8 + GND | Granularität weniger gut | niedrig |

In der weiteren Beschreibung wird der Einfachheit halber nur auf den Typ mit vier I/O-Pins + GND Bezug genommen.

Anmerkung: In einem System mit mehreren Schnittstellenschaltkreis-Chips wird deren Ansteuerung meistens von einem einzigen FPGA vorgenommen. Auch die Systemfunktionen werden in diesem FPGA oder in Software realisiert. Alle Schnittstellenschaltkreis-Chips werden sinnvollerweise synchron angesteuert, so daß auch das Abtasten von Eingängen und das Setzen von Ausgängen zeitgleich erfolgen kann. Deshalb hat die Aufteilung der I/O-Pins einer Schnittstelle, für die mehrere I/O-Pins benötigt werden, auf verschiedene Schnittstellenschaltkreis-Chips keine Bedeutung für die Funktion, z.B. bei einem Inkrementalgeberinterface.

Im folgenden wird die Erfindung anhand eines Ausführungsbeispieles im Zusammenhang mit der Zeichnung ausführlicher erläutert. Es zeigt:
- Fig. 1: ein Prinzipschaltbild eines Schnittstellenschaltkreises mit galvanischer Trennung;
- Fig. 2: ein detaillierteres Blockschaltbild eines Schnittstellenschaltkreis-Chips;
- Fig. 3: ein detaillierteres Blockschaltbild der Ansteuerlogik für den Schnittstellenschaltkreis-Chip der Fig. 2;
- Fig. 4: ein Blockschaltbild zur Erläuterung der Kaskadierung; und
- Fig. 5: ein Blockschaltbild ähnlich Fig. 1 jedoch ohne galvanische Trennung.

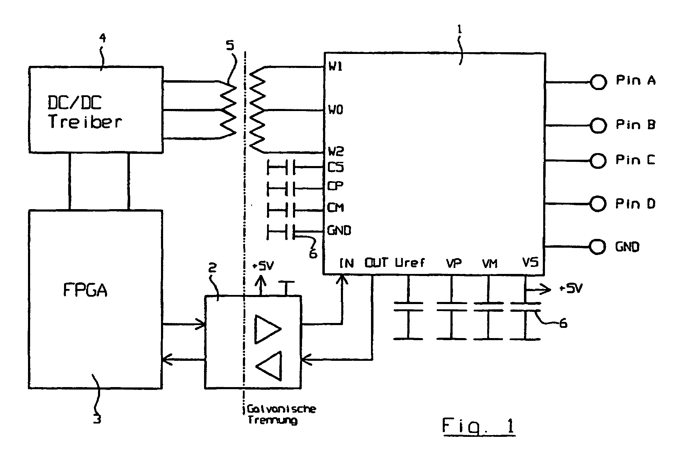

Zunächst sei auf Fig. 1 Bezug genommen.

Der Schnittstellenschaltkreis enthält als wesentliches Element einen Schnittstellenschaltkreis-Chip 1, der mehrere I/O-Pins hat, die hier mit Pin A bis Pin D bezeichnet sind, sowie einen Masseanschluß, der mit GND bezeichnet ist. Dies sind die Anschlüsse, an denen die Prozeßankopplung erfolgt, also beispielsweise Daten, Meßwerte, Steuerbefehle und ähnliches mit externen Geräten oder Maschinen ausgetauscht werden. Der Schnittstellenschaltkreis-Chip 1, der im folgenden nur Chip 1 genannt wird, hat weiterhin zwei Anschlüsse IN, OUT zur Kommunikation mit einer Logikschaltung 3, die beispielsweise als FPGA oder ASIC ausgebildet ist. Die Kommunikation erfolgt hier über eine galvanische Trennung 2, die beispielsweise ein Optokoppler, ein Magnetkoppler, ein Transformator oder eine sonstige bekannte Einrichtung zur galvanischen Trennung sein kann. Die Kommunikation erfolgt bidirektional, also vom Chip 1 zur Logikschaltung 3 über den Anschluß OUT oder umgekehrt von der Logikschaltung 3 zum Chip 1 über den Anschluß IN.

Zur galvanisch getrennten Energieversorgung ist ein DC/DC-Treiber 4 vorgesehen, der über einen Transformator 5 mit Anschlüssen W0, W1 und W2 des Chips 1 verbunden ist. Schließlich hat der Chip 1 noch mehrere Anschlüsse (C5, CP, CM, Uref, VP, VM, V5, GND) für externe Beschaltungen, die beispielsweise durch Kondensatoren 6 realisiert sind.

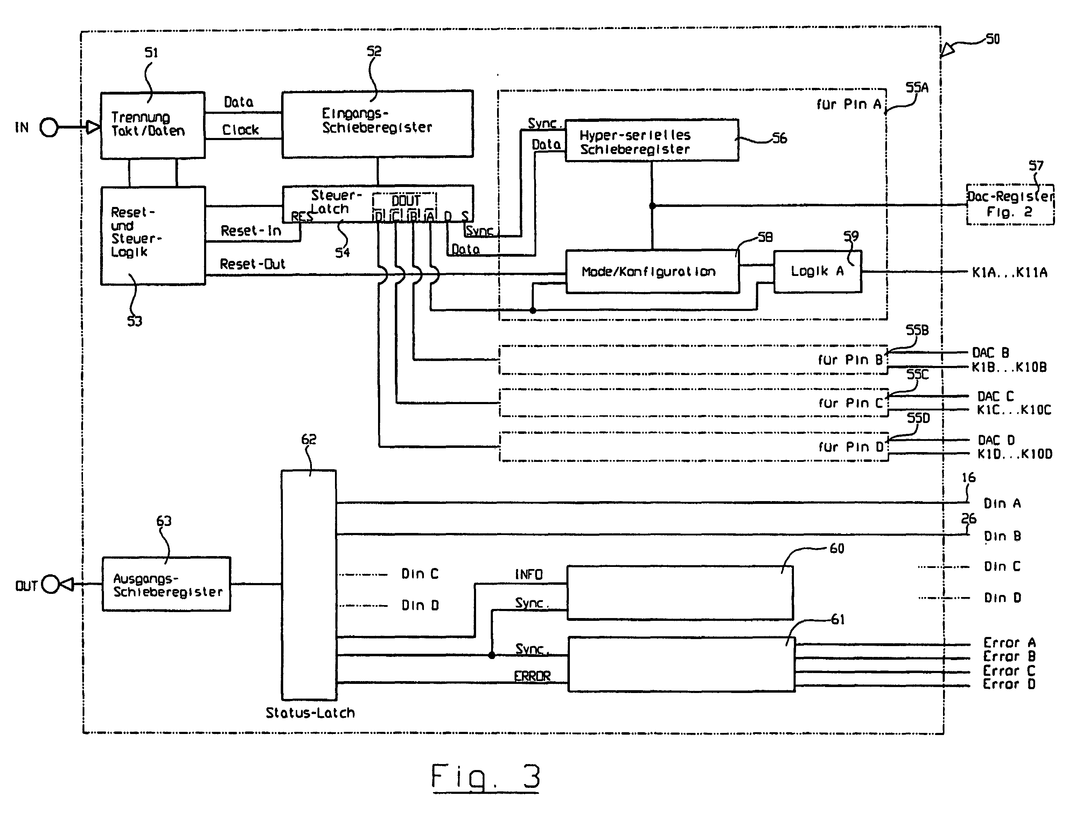

Im Zusammenhang mit den Figuren 2 und 3 wird eine Schnittstellenschaltkreisarchitektur mit vier I/O-Pins, nämlich Pin A, Pin B und Pin C und Pin D beschrieben. Da die Schaltung immer für ein Paar von Pins identisch ist, ist nur die Schaltung für das Paar Pin A und Pin B dargestellt. Die Schaltung für das Paar Pin C und Pin D ist dann identisch aufgebaut.

Der Pin A ist über eine Leitung mit einem ersten Multiplexer 11 (MUX 1A) und einem zweiten Multiplexer 12 (MUX 2A) verbunden. Der Ausgang des Multiplexers 11 ist mit Vergleichseingängen von zwei Komparatoren 13 und 14 (KOMP 1A und KOMP 2A) verbunden, die für die Funktion der Analog-/Digital-Wandlung eingesetzt werden. Die Ausgänge beider Komparatoren 13 und 14 sind mit einer Hystereseschaltung 15 verbunden, deren Ausgang 16 (Din A) mit einer Logikschaltung 50 (Fig. 3) verbunden ist.

Der Pin A ist weiterhin mit einem Anschluß eines steuerbaren Umschalters 17 (S1 A) verbunden, dessen weitere Anschlüsse mit dem Multiplexer 11 und einem Kondensator 18 (C1 A) verbunden sind. Der Schalter ist über einen Steuereingang (K1 A) umschaltbar. Der Umschalter 17 mit Kondensator 18 dient als Sample-and-Hold-Schaltung für eine weiter unten noch zu beschreibende Analog-/Digital-Wandlung.

Der Pin A ist weiter über eine Leitung mit einem Multiplexer 21 (MUX1 B) verbunden, an dessen Ausgang zwei Komparatoren 23 (KOMP1 B) und 24 (KOMP2 B) angeschlossen sind. In entsprechender Weise sind die Ausgänge der Komparatoren 23 und 24 mit einer Hystereseschaltung 25 verbunden, die wiederum über Ihren Ausgang 26 (Din B) mit der Logikschaltung 50 verbunden ist.

Es sind weiter zwei Register 18 und 28 (DAC A-Register und DAC B-Register) für eine Digital-/Analog-Wandlung vorgesehen, an die je ein Digital-/Analog-Wandler 19 (DAC A) bzw. 29 (DAC B) angeschlossen ist. Der Ausgang des Digital-/Analog-Wandlers 19 ist mit den Referenzeingängen der Komparatoren 13 (KOMP1 A) und 24 (KOMP2 B) verbunden. Der Ausgang des Digital-/Analog-Wandlers 29 (DAC B) ist mit den Referenzeingängen der Komparatoren 23 (KOMP1 B) und 14 (KOMP2 A) verbunden sowie mit einem dritten Eingang des Multiplexers 11.

Der Ausgang des Digital-/Analog-Wandlers 19 ist mit einem Anschluß des Multiplexers 12 sowie einem Anschluß eines Multiplexers 22 (MUX2 B) verbunden, der mit dem Pin B verbunden ist. Der Ausgang des Digital-/Analog-Wandlers 29 (DAC B) ist ebenfalls mit Anschlüssen der Multiplexer 12 und 22 verbunden. Dem Multiplexer 12 ist ein Spannungs-/Strom-Wandler 31 und dem Multiplexer 22 ein Spannungs-/Strom-Wandler 32 zugeordnet, die mit dem Digital-/Analog-Wandler 19 bzw. dem Digital-/Analog-Wandler 29 verbunden sind, je einen Meßwiderstand 33 (R1 A) bzw. 34 (R1 B) aufweisen, die mit dem zugeordneten Multiplexer 12 bzw. 22 verbunden sind. Schließlich haben die Multiplexer 12 und 22 je einen Masseanschluß 35 bzw. 36, dessen Funktion weiter unten erläutert wird.

Zwischen Pin A und B liegt eine Reihenschaltung aus einem Widerstand 37 (R2) und einem steuerbaren Schalter 38 (S2), der über einen Steueranschluß (K8) steuerbar ist.

Weiter ist der Pin B mit einem Umschalter 39 (S4) verbunden, dessen Ausgang mit dem Multiplexer 21 und einer weiteren Sample-and-Hold-Schaltung, bestehend aus einem Umschalter 40 (S1 B) und einem Kondensator 41 (C1 B), verbunden ist, wobei der Umschalter über einen Steuereingang K1 B umschaltbar ist. Der andere Anschluß des Umschalters 40 ist mit dem Multiplexer 21 verbunden.

Für den zweiten Anschluß des Umschalters 39, der über einen Steuereingang K11 steuerbar ist, sind zwei Varianten möglich. In der ersten Variante ist dieser Anschluß über eine Leitung 42 mit dem gemeinsamen Verbindungspunkt des Widerstandes 37 und des Schalters 38 verbunden. In der zweiten Alternative ist statt der Leitung 42 eine Reihenschaltung, bestehend aus einem Umschalter 43, einem Differenzverstärker 44 und einem Verstärkungsregler 45 vorgesehen, die wie folgt verschaltet ist: Ein Anschluß des Umschalters 43 (S3) ist mit dem gemeinsamen Verbindungspunkt zwischen dem Widerstand 37 und dem Schalter 38 verbunden. Der andere Eingangsanschluß ist mit Pin B verbunden. Der Ausgang des Schalters 43 ist mit einem Eingang des Differenzverstärkers 44 verbunden, dessen anderer Anschluß mit Pin A verbunden ist. Der Ausgang des Differenzverstärkers 44 ist mit dem Eingang des Verstärkungsreglers 45 verbunden, dessen Ausgang dann mit dem anderen Anschluß des Umschalters 39 (S4) verbunden ist. Der Verstärkungsregler ist über einen Steueranschluß K10 steuerbar.

Die Multiplexer 11, 21, 12 und 22 sind je über Steuereingänge K4 A, K3 A bzw. K4 B, K3 B bzw. K7 A, K6 A, K5 A bzw. K7 B, K6 B, K5 B steuerbar.

Die Schaltung für die Pins C und D ist identisch aufgebaut, wie durch den Block 46 angedeutet.

Der Chip 1 hat zusätzlich den oben schon erwähnten Masseanschluß GND.

Die Anschlüsse 16 (D IN A), 26 (D IN B), 47 (D OUT A) und 48 (D OUT B) stellen lediglich Anschlüsse der Logikschaltung 50 dar , die den Zusammenhang zwischen Fig. 2 und Fig. 3 verdeutlichen. Die DAC-Register 18 und 28 sowie sämtliche erwähnten Steueranschlüsse K... sind mit einer Steuerschaltung 50 verbunden, die in Fig. 3 detaillierter dargestellt ist und die die bidirektionale Verbindung zu dem Logikschaltkreis 3 der Fig. 1 über die Anschlüsse IN bzw. OUT herstellt.

Bei der in Fig. 2 als Beispiel dargestellten Schnittstellenschaltkreis-Architektur ist die galvanische Trennung sehr weit vorne zum I/O-Pin hin gemacht, d.h. von den analogen Funktionen sind nur der Digital-/Analog-Wandler und die Komparatoren 13, 14, 23, 24 auf der Schnittstellenschaltkreisseite integriert.

Die Analog-Digital-Wandlung (ADC) wird nach dem Prinzip der sukzessiven Approximation im Zusammenspiel mit dem Logikschaltkreis 3 (FPGA) vorgenommen.

Zu Beginn der Messung wird die Eingangsspannung an Pin A bzw. Pin B in der Sample/Hold-Stufe 17,18 bzw. 40,41 zwischengespeichert. Diese wird mit dem Ausgang des Digital-Analog-Wandlers 19 bzw. 29 verglichen, der zunächst auf halbem Vollausschlag (bei 12 Bit 2048 = 800h) gesetzt ist. Das Ergebnis (Ausgang des Komparators 13,14 bzw. 23,24) wird als ein Bit im seriellen Datenstrom zum Logikschaltkreis 3 (FPGA) übertragen. Es wird also jeweils nur ein Bit des Ergebnisses ermittelt und danach der Wert des Digital-Analog-Wandler 19 bzw. 29 (DAC A bzw. DAC B) neu eingestellt. Hierfür muß kein komplett neuer Digital-Analog-Wandler-Wert zum Chip 1 übertragen werden, sondern lediglich das Digital-Analog-Wandler-Register 19 bzw. 28 abhängig vom vorherigen Komparator-Ergebnis geändert werden (das aktuelle Bit wird gleich dem Ergebnis gesetzt, das nächst niedrige Bit wird = 1 gesetzt). Dies wird so oft wiederholt, bis die Wandlung fertig ist.

Im folgenden werden die Betriebsarten der Schaltung der Fig. 2 im Zusammenhang mit den folgenden Tabellen 1, 2a und 2b beschrieben.

Überspannungsschutz an den I/O-Pins wurde aus Gründen der Übersichtlichkeit weggelassen, da das keinen Einfluß auf die prinzipielle Funktionsweise hat.

Die folgende Beschreibung bezieht sich bei den Betriebsarten, die nur einen I/O-Pin nutzen (sog. 1-Pin Betriebsarten), auf I/O-Pin A. Die Beschreibung gilt dann analog auch für I/O-Pin B, I/O-Pin C und I/O-Pin D. Bei den 2-Pin Betriebsarten werden zwei I/O-Pins genutzt, die Beschreibung bezieht sich dann auf I/O-Pin A und I/O-Pin B. Die Beschreibung gilt dann analog auch für I/O-Pin C und I/O-Pin D. Alle Betriebsarten werden durch Signale an den Steuereingängen K1 bis K11 eingestellt, was den nachfolgenden Tabellen 1, 2a und 2b zu entnehmen ist.

### 1-Pin Betriebsarten (siehe Fig. 2 und Tabelle 1)

**Tabelle 1:**

| Zusammenfassung der Konfiguration K1..K11 für die 1-Pin-Betriebsarten | | | | | | | | | | | | |
|---|---|---|---|---|---|---|---|---|---|---|---|---|
| Mode | K1 0=hold | K2 1=on | K4 K3 Mux1 | | K7 K6 K5 Mux2 | | | K8 1=on | K9 1=U | K10 0=P | K11 | Dout |
| Digital In | 0 | nB | 0 | 0 | 0 | 0 | 0 | 0 | 0 | 0 | 0 | X |
| Digital Out: OD | 0 | 0 | 0 | 0 | /D | 0 | 0 | 0 | 0 | 0 | 0 | =/K7 |
| Digital Out: PP | 0 | 0 | 0 | 0 | 1 | 0 | D | 0 | 0 | 0 | 0 | = K5 |
| Digital Out: LH | 0 | 0 | 0 | 0 | 1 | /D | 1 | 0 | 0 | 0 | 0 | =/K6 |
| Analog In: U, Masse-bezogen | SH | 0 | 0 | 1 | 0 | 0 | 0 | 0 | 0 | 0 | 0 | x |
| Analog Oulr U A | 0 | 0 | 0 | 0 | 1 | 0 | 1 | 0 | 0 | 0 | 0 | x |
| B | 0 | 0 | 0 | 0 | 1 | 1 | 1 | - | - | - | - | x |
| Analog Out 1 | 0 | 0 | 0 | 0 | 1 | 1 | 0 | 0 | 0 | 0 | 0 | x |
| Pin als GND | 0 | 0 | 0 | 0 | 1 | 0 | 0 | 0 | 0 | 0 | 0 | x |
| Test, s.u. | | | | | | | | | | | | |
| Read-Back, s.u. | | | | | | | | | | | | |
| Erklärung zu den Abkürzungen: nB = nach Bedarf (Initialisierung), OD = Open Drain, PP = Null-High, LH = Low-High, D = Dout, /D = D invertiert, SH = Sample/Hold (0=Hold), U = Spannung, I = Strom, - = entfällt bzw. nicht vorhanden, x = beliebig | | | | | | | | | | | | |

### Anmerkung zu Test und Read-Back:

Beide Modes sind nur der Vollständigkeit aufgeführt, auch die Verschaltung hierfür in Fig. 3 wurde der Übersichtlichkeit halber weggelassen. Auf die prinzipielle Funktionsweise hat dies keine Auswirkungen.

### Digital-In (Typ Masse-bezogen):

Diese Betriebsart verwendet nur einen I/O-Pin, nutzt aber zwei Digital-Analog-Wandler 19 und 29 zur Einstellung von Schwelle und Hysterese, so daß je zwei I/O-Pins A und B bzw. C und D dieselben Eigenschaften haben. Der Digital-Analog-Wandler 19 (DAC A) liefert die Schwelle, der Digital-Analog-Wandler 29 (DAC B) wird um die Hysterese niedriger als Digital-Analog-Wandler 19 (DAC A) eingestellt. Über den Multiplexer 11 (Mux 1A) (mit K4A, K3A = 00b) liegt die Eingangsspannung von I/O-Pin A am +Eingang vom Komparator 13 (Komp 1A), der diese mit der von Digital-Analog-Wandler 19 (DAC A) vergleicht. Entsprechend vergleicht Komparator 12 (Komp 2A) sie mit der vom Digital-Analog-Wandler 29 (DAC B). Die Auswertung bzgl. Hysterese 15 wird digital ausgeführt, wobei mit K2A die Hystereseschaltung 15 ein- bzw. ausgeschaltet werden kann.

Für I/O-Pin B gilt das entsprechend, nur daß hier die Funktion von Komparator 23 (Komp 1 B) und Komparator 24 (Komp 2B) vertauscht sind.

**Digital-Out** (Typ PP, Low < 0,4V, High = Digital-Analog-Wandler 19 (DAC A) Diese Betriebsart verwendet nur einen I/O-Pin. Der Low-Pegel ist = GND, der High-Pegel wird von Digital-Analog-Wandler 19 (DAC A) vorgegeben, der für I/O-Pin A und B verwendet wird, so daß je zwei I/O-Pins dieselben Eigenschaften haben. Der Multiplexer 12 (Mux 2A) schaltet zwischen diesen beiden Zuständen um. Wenn Dout A = 0, wird GND (= Low-Pegel) über den Multiplexer 12 (Mux 2A) (mit K7A, K6A, K5A = 100b) auf I/O-Pin A gelegt. Wenn Dout A = 1, dann wird die Ausgangsspannung von Digital-Analog-Wandler 19 (DAC A) als High-Pegel auf I/O-Pin A gelegt (mit K7A, K6A, K5A = 101b) . Die Umschaltung erfolgt zur Vermeidung von Nadelimpulsen am Ausgang durch Ändern von nur einem Bit an Multiplexer 12 (Mux 2A) (= K5A). Entsprechendes gilt für I/O-Pin B.
Der Digital-Analog-Wandler 29 (DAC B) und andere Schaltungsteile sind frei und können z.B. zum Messen der aktuellen Spannung an den beiden I/O-Pins verwendet werden.

### Digital-Out (Typ LH, Low = DAC B, High = DAC A):

Diese Betriebsart verwendet nur einen I/O-Pin. Der Low-Pegel wird von Digital-Analog-Wandler 29 (DAC B), der High-Pegel von Digital-Analog-Wandler 19 (DAC A) vorgegeben. Beide werden für I/O-Pin A und B verwendet, so daß je zwei I/O-Pins dieselben Eigenschaften haben. Der Multiplexer 12 (Mux 2A) schaltet zwischen diesen beiden Zuständen um. Wenn Dout A = 0, wird die Ausgangsspannung von Digital-Analog-Wandler 29 (DAC B) als Low-Pegel auf I/O-Pin A gelegt (K7A, K6A, K5A = 111b). Wenn Dout A = 1, wird die Ausgangsspannung von Digital-Analog-Wandler 19 (DAC A) als High-Pegel auf I/O-Pin A gelegt (K7A, K6A, K5A = 101b). Die Umschaltung erfolgt zur Vermeidung von Nadelimpulsen am Ausgang durch Ändern von nur einem Bit an Multiplexer 12 (Mux 2A) (= invertiert K6A). Entsprechendes gilt für I/O-Pin B.

### Digital-Out (Typ OD, Low = GND, High = Open Drain):

Diese Betriebsart verwendet nur einen I/O-Pin. Der Low-Pegel ist = GND, der High-Pegel ist Open Drain. Der Multiplexer 12 (Mux 2A) schaltet zwischen diesen beiden Zuständen um. Wenn Dout A = 0, dann wird GND (= Low-Pegel) über den Multiplexer 12 (Mux 2A) (K7A, K6A, K5A = 100b) auf I/O-Pin A gelegt. Wenn Dout A = 1, dann wird I/O-Pin A auf n.c. (= not connected) gelegt (K7A, K6A, K5A = 000b). Die Umschaltung erfolgt zur Vermeidung von Nadelimpulsen am Ausgang durch Ändern von nur einem Bit an Multiplexer 12 (Mux 2A) (= invertiert K7A). Entsprechendes gilt für I/O-Pin B.

Der Digital-Analog-Wandler 19 (DAC A),der Digital-Analog-Wandler 29 (DAC B) und andere Schaltungsteile sind frei und können z.B. zum Messen der aktuellen Spannung an den beiden I/O-Pins verwendet werden.

### Analog-In (Typ Spannung, Masse-bezogen):

Diese Betriebsart verwendet nur einen I/O-Pin. Die Eingangsspannung an I/O-Pin A wird zu Beginn der Wandlung über den Schalter 17 (S1A) in dem Kondensator 18 (C1A) für die gesamte Dauer der Wandlung gespeichert. Der Komparator 1A vergleicht diese Spannung mit der von Digital-Analog-Wandler 19 (DAC A) und führt die AD-Wandlung durch - wie oben beschrieben. Danach wird durch Umschalten des Schalters 17 (S1A) wieder der aktuelle Wert an I/O-Pin A im Kondensator 18 (C1A) gespeichert. Für I/O-Pin B gilt entsprechendes.

Um die Stromaufnahme zu reduzieren, kann bei allen Betriebsarten, bei denen eine AD-Wandlung beteiligt ist, zwischen Fortlaufend oder getriggert umgeschaltet werden.

### Analog-Out (Typ Spannung):

Diese Betriebsart verwendet nur einen I/O-Pin. Die Ausgangsspannung vom Digital-Analog-Wandler 19 (DAC A) wird über den Multiplexer 12 (Mux 2A) an den I/O-Pin A gelegt (K7A, K6A, K5A = 101 b).
Für I/O-Pin B gilt entsprechendes, allerdings mit K7B, K6B, K5B = 111b.

### Analog-Out (Typ Strom):

Diese Betriebsart verwendet nur einen I/O-Pin. Die Ausgangsspannung vom Digital-Analog-Wandler 19 (DAC A) wird in dem Strom/Spannungswandler 31 (U/I A) in einen Konstantstrom gewandelt und über den Multiplexer 12 (Mux 2A) an I/O-Pin A geliefert (K7A, K6A, K5A = 110b). Entsprechendes gilt mit dem Strom/Spannungswandler 32 (U/I B) für I/O-Pin B.

### 2-Pin Betriebsarten mit echter Differenzbildung (siehe Fig. 2 und Tabelle 2a)

**Tabelle 2a:**

| Konfiguration K1..K11 für 2-Pin-Betriebsarten mit echter Differenzverstärkung | | | | | | | | | | |
|---|---|---|---|---|---|---|---|---|---|---|
| Mode | | K1 0=Hold | K2 1=on | K4 K3 Mux1 | K7 K6 K5 Mux2 | K8 1=on | K9 1=U | K10 0=P | K11 | Dout |
| Analog In: U | A | 0 | 0 | 0 0 | 0 0 0 | 0 | 1 | nB | 1 | x |
| | B | SH | 0 | 0 1 | 0 0 0 | - | - | - | - | x |
| Analog In: I | A | 0 | 0 | 0 0 | 0 0 0 | 1 | 0 | - | 1 | x |
| | B | SH | 0 | 0 1 | 0 0 0 | - | - | - | - | x |
| Erklärung zu den Abkürzungen: nB = nach Bedarf (Initialisierung, SH = Sample/Hold (0=Hold), U = Spannung, I = Strom, - = entfällt bzw. nicht vorhanden, x = beliebig | | | | | | | | | | |

Hierfür sind zusätzlich die in Fig. 2 gestrichelt und schraffiert eingezeichneten Schaltungsteile 43, 44 und 45 erforderlich. Die gestrichelt gezeichnete Verbindung 42 entfällt.

### Analog-In (Typ Spannung, Differenz):

Bei dieser Betriebsart werden zwei I/O-Pins verwendet. Mit dem Differenzverstärker 44 wird die Differenz zwischen der Spannung an I/O-Pin A (liegt direkt am +Eingang vom Differenzverstärker 44) und der an I/O-Pin B (mit K9 = 1 liegt I/O-Pin B über den Schalter 38 (S3) am -Eingang des Differenzverstärkers 44) gebildet, ggf. mit dem Verstärker 45 verstärkt und dann über den Schalter 39 (S4) (K11 = 1) an die Sample/Hold-Schaltung 40,41 (S1B) gelegt und dann mit dem Multiplexer 21 (Mux1B) und dem Komparator 23 (Komp 1B) mit dem Digital-Analog-Wandler 29 (DAC B) gewandelt.

### Analog-In (Typ Strom, Differenz):

Diese Betriebsart verwendet zwei I/O-Pins. Mit K8 = 1 wird über den Schalter 38 (S2) der Widerstand 37 (R2) zur Strommessung zwischen I/O-Pin A und I/O-Pin B geschaltet. Mit dem Differenzverstärker 44 wird die Spannungsdifferenz zwischen beiden Anschlüssen des Widerstandes 37 (R2) gebildet. Der obere Anschluß (= I/O-Pin A) liegt direkt am +Eingang vom Differenzverstärker 44. Der untere Anschluß liegt mit K9 = 0 über den Schalter 43 (S3) am -Eingang des Differenzverstärkers 44. Die Differenz wird ggf. mit dem Verstärker 45 verstärkt und dann über den Schalter 39 (S4) (K11 = 1) an die Sample/Hold-Schaltung 40, 41 (S1B) gelegt und dann mit dem Multiplexer 21 (Mux 1B) und dem Komparator 23 (Komp1B) mit dem Digital-Analog-Wandler 29 (DAC B) gewandelt.

Wenn das Signal am Eingang 0 von Multiplexer 1B auch an einen weiteren Eingang 3 von Multiplexer 1A gelegt würde, könnte Digital-Analog-Wandler 19 (DAC A) zusammen mit Komparator 14 (Komp 2A) verwendet werden, um eine Überstrom-Schutzschaltung zu realisieren. Mit dem Digital-Analog-Wandler 19 (DAC A) könnte dann eine Schwelle eingestellt werden, bei deren Überschreiten der Schalter 38 (S2) automatisch abgeschaltet wird, um den Widerstand 37 (R2) vor Überlast zu schützen. Diese Schaltung würde sehr schnell innerhalb des Chips 1 ohne Mitwirkung der FPGA-Seite reagieren. Zum FPGA würde ein Fehler gemeldet.

### 2-Pin Betriebsarten mit Pseudo-Differenzbildung (siehe Fig 2 und Tabelle 2b)

**Tabelle 2b:**

| Konfiguration K1..K11 für die 2-Pin-Betriebsarten mit Pseudo-Differenzverstärkung. | | | | | | | | | | |
|---|---|---|---|---|---|---|---|---|---|---|
| Mode | | K1 0=Hold | K2 1=on | K4 K3 Mux1 | K7 K6 K5 Mux2 | K8 1=on | K9 1=U | K100=P | K11 | Dout |
| Analog In: U | A | SH | 0 | 0 1 | 0 0 0 | 0 | 0 | 0 | 0 | x |
| | B | SH | 0 | 0 1 | 0 0 0 | - | - | - | - | x |
| Analog In: I | A | SH | 0 | 0 1 | 0 0 0 | 1 | - | 0 | 0 | x |
| | B | SH | 0 | 0 1 | 0 0 0 | - | - | - | - | x |
| Erklärung zu den Abkürzungen: nB = nach Bedarf (Initialisierung, SH = Sample/Hold (0=Hold) , U = Spannung, I = Strom, - = entfällt bzw. nicht vorhanden, x = beliebig | | | | | | | | | | |

Hierfür können die in Fig. 2 gestrichelt und schraffiert eingezeichneten Schaltungsteile 43, 44 und 45 entfallen und durch die gestrichelt gezeichnete Verbindung 42 ersetzt werden.

### Analog-In (Typ Spannung, Differenz):

Bei dieser Betriebsart werden zwei I/O-Pins verwendet. Die Spannungen an I/O-Pin A und I/O-Pin B werden unabhängig voneinander zeitgleich in den Kondensatoren 18 und 41 (C1A bzw. C1B) abgetastet und jede für sich gewandelt, so wie bei der Betriebsart Analog-In (Typ Spannung, Masse-bezogen) beschrieben. Erst auf der digitalen Seite im FPGA wird die Differenz gebildet.

### Analog-In (Typ Strom, Differenz):

Diese Betriebsart verwendet zwei I/O-Pin s. Mit K8 = 1 wird über den Schalter 38 (S2) der Widerstand 37 (R2) zur Strommessung zwischen I/O-Pin A und I/O-Pin B geschaltet. Die Spannungen an beiden Anschlüssen von R2 werden unabhängig voneinander gemessen. Die Spannung am oberen Anschluß des Widerstandes 37 (R2) entspricht der Spannung an I/O-Pin A, die am unteren Anschluß liegt über die gestrichelte Verbindung und den Schalter 39 (S4) (K11 = 1) an der Sample/Hold-Schaltung 40, 41 (S1B). Beide Spannungen werden zeitgleich in den Kondensatoren 18 und 41 (C1A und C1B) abgetastet und jede für sich gewandelt, so wie bei der Betriebsart Analog-In (Typ Spannung, Masse-bezogen) beschrieben. Erst auf der digitalen Seite im FPGA 3 wird die Differenz gebildet.

Fig. 3 zeigt ein Blockschaltbild der Logikschaltung 50 mit den Anschlüssen IN und OUT, über die die Kommunikation mit dem Logikschaltkreis 3 (Fig. 1) über die galvanische Trennung 2 durchgeführt wird. Generell findet in jeder Richtung ein Datenstrom statt. In Richtung von der Logikschaltung 3 zu dem Chip 1 werden zunächst für die Programmierung des Chips 1 die Daten übertragen, mit denen die Steuereingänge K1 A bis K10 D, K11 A, K1 B bis K10 B, K1 C bis K11 C, K1 D bis K10 D zur Programmierung der Schalter, der Multiplexer und der sonstigen Bausteine der Fig. 2 übertragen werden.

Zunächst sei die Schaltung beschrieben. Vom Anschluß IN führt eine Leitung zu einem Logikschaltkreis 51, der eine Trennung von Taktsignalen und Daten vornimmt und von dort getrennt an ein Eingangsschieberegister 52 und eine Reset- und Steuerlogik 53 weiterleitet. Das Eingangsschieberegister 52 und die Reset- und Steuerlogik 53 sind mit einem Steuer-Latch 54 verbunden, dessen Ausgänge (A, B, C, D) den Blöcken 47 (DOUT A) und 48 (DOUT B) und entsprechenden Anschlüssen für die Pins C und D der Fig. 2 entsprechen. Weitere Ausgänge "Data" und "Sync" sind mit einem "hyper-seriellen" Schieberegister 56 verbunden (Der Begriff "hyper-seriell" wird weiter unten erläutert). Dieses wiederum ist mit dem DAC-Register 18 verbunden, das hier zum besseren Verständnis noch einmal abgebildet ist, sowie mit einem Register 58 für Betriebsarten und Konfiguration. Der Ausgang des Registers 58 ist mit einer Logikschaltung 59 verbunden, deren Ausgänge mit den Konfigurationsanschlüssen K1 A bis K11 A verbunden sind. Die genannten Bausteine 56, 18, 58 und 59 sind zusammengefaßt als Block 55A für den Pin A vorgesehen. In analoger Weise sind identische Bausteine 55 B, 55 C und 55 D für die Pins B, C und D vorgesehen.

In Richtung vom Chip 1 zur Logikschaltung 3 (Fig. 1) sind die Anschlüsse 16, 26 für Din A, Din B sowie in analoger Weise für Din C und Din D vorgesehen, die mit einem Status-Latch 62 und über ein Ausgangsschieberegister 63 mit dem Anschluß OUT verbunden sind. Zusätzlich sind Logikschaltkreise 60 und 61 vorgesehen, die Datenkanäle für Informationen bzw. für Fehlermeldungen darstellen und ebenfalls mit dem Status-Latch 62 verbunden sind. Der Logikschaltkreis 60 liefert per "hyper-serieller" Übertragung Informationen über den Chip selbst, über dessen aktuelle Konfiguration etc. Er bezieht diese Informationen entweder aus fest einprogrammierten Speicherzellen im Chip, wie z.B. eine Herstellerkennung oder durch Rücklesen der eingestellten Konfiguration des Chips, also z.B. den aktuellen Stand der Schalter K1 A...K11 A, K2 B....K10 B usw.

Der Logikschaltkreis 61 arbeitet im Prinzip in gleicher Weise für Fehlerinformationen, die bei der Konfiguration oder während des Betriebes auftreten können. Diese Information erhält der Logikschaltkreis 61 über Leitungen "Error A" bis "Error D", wobei jede von ihnen eine Vielzahl solcher Einzelinformationen repräsentieren kann. Beispielsweise könnte man für jeden der Pins eine Überstrom- und/oder eine Überspannungskennung einbauen.

Im folgenden wird die Arbeitsweise der Schaltung der Fig. 3 näher erläutert.

### Der Datenstrom vom/zum Rchnittstellenschaltkreis-Chip

In jeder Richtung ist ein serieller 1-Bit Datenstrom vorgesehen. Im einfachsten Fall kann das ein asynchroner Datenstrom sein, von Vorteil ist aber ein synchroner Datenstrom, da hierdurch auch auf Schnittstellenschaltkreis-Seite ohne eigenen Quarzoszillator ein kontinuierlicher Takt rekonstruiert werden kann. Der Datenstrom zum Chip 1 läuft kontinuierlich mit fest vorgegebener Bedeutung der Bits. Auf der Schnittstellenschaltkreis-Seite wird aus diesem Datenstrom der Takt herausgefiltert (51) und für verschiedene Zwecke im Chip 1 verwendet, z.B. auch für das Senden der Daten vom Chip 1 zum FPGA 3. Das Senden von Daten vom Chip 1 geschieht ebenfalls mit festgelegter Bedeutung der Bits. Insgesamt reichen für jede Richtung 8 Bit aus, danach wiederholt sich der Datenstrom.

Um die Einsatzmöglichkeiten des Chips 1 zu erhöhen, wurde auch die Art der Kommunikation (sync., async, SPI) im Chip 1 konfigurierbar ausgeführt.

### Übertragungssicherheit, Parity

In jeder Richtung wird über ein gesendetes 7-Bit Wort ein Parity-Bit gebildet und als letztes Datenbit gesendet. Dieses wird auf beiden Seiten überprüft. Bei einem Übertragungsfehler vom FPGA 3 zum Chip 1 kann dieser also den Fehler entdecken und dann im nächsten gesendeten Wort ein Fehlerbit zurücksenden. Die Art des Fehlers kann, wie unten beschrieben, codiert und mit übertragen werden.

### "Hyper-serielle" Übertragung

Zunächst sei der Begriff "hyper-seriell" erläutert. Zwischen dem Chip 1 und dem FPGA 3 läuft ein kontinuierlicher Datenstrom in beiden Richtungen synchron zum Takt, der im FPGA 3 erzeugt wird und im Datenstrom enthalten ist. Die eigentlichen Informationen werden in beiden Richtungen seriell übertragen, beispielsweise mit Worten von 8 Bit. Nach der Übertragung eines solchen 8-Bit-Wortes beginnt sofort die Übertragung des nächsten 8-Bit-Wortes. Die Bedeutung der einzelnen Bits ist frei wählbar und in einem Ausführungsbeispiel weiter unten erläutert. So ist dort beispielsweise für jeden der vier Pins A, B, C und D ein Bit vorgesehen, das, wenn der Pin als Ausgang konfiguriert wurde, den Zustand des Ausgangs festlegt. Man kann also mit jedem übertragenen 8-Bit-Wort den Zustand eines oder mehrerer Pins ändern. Um den Zustand eines Ausgangspins zu ändern, muß man immer solange warten, bis wieder ein 8-Bit-Wort übertragen wurde. Erst danach wird die Änderung am Ausgangspin wirksam. Das begrenzt die maximale Änderungsgeschwindigkeit. Bei einer 100 MHz Übertragungsrate zwischen den Blöcken 1 und 3 in Fig. 1 erreicht man damit also maximal eine Änderungsrate von 1 pro 80ns, allerdings auch für alle vier Pins gleichzeitig. Wenn für einen Pin eine andere Betriebsart (anders als als Ausgangspin) konfiguriert ist, kann man das entsprechende Bit in dem 8-Bit-Wort anders definieren. Im nachstehenden Kapitel "der Datenstrom zum Schnittstellenschaltkreis-Chip" ist auch die Bedeutung der Bits 4 und 6 dargestellt. Diese werden für die sog. hyper-serielle Übertragung benutzt. Hierbei wird in jedem 8-Bit-Wort nur ein Bit einer bestimmten Information übertragen. Bis so eine Information komplett übertragen ist, dauert es also erheblich länger. Der Beginn der neuen Übertragung wird durch Bit 4 im 8-Bit-Wort angezeigt. Wenn dieses Bit gleich 0 ist, wird in Bit 6 (= data) das erste Bit der Information geliefert. Im nächsten 8-Bit-Wort folgt dann das nächste Bit der Information etc. Die Übertragung der gesamten Information geht also langsamer. Die Art der Information und ihre Länge werden ebenfalls mit übertragen, so daß es für unterschiedliche Informationen auch unterschiedlich lange dauern kann. Dasselbe Prinzip ist auch bei der hyper-seriellen Übertragung von Block 1 an Block 3 verwendet. Dabei kann z.B. ein Code abgerufen werden, der den Hersteller des Chips erkennen läßt.

Zusätzlich sind für beide Kommunikationsrichtungen für jeden I/O-Pin und für allgemeine Informationen und Fehlermeldungen sog. hyper-serielle Datenkanäle (vgl. zum Beispiel vom Chip 1 zum FPGA 3 die Blöcke 60 und 61 in Fig. 3) vorgesehen. Sie bilden für Informationen, die länger sind als ein Bit, eine Wort-serielle Übertragung, d.h. in jedem 8-Bit-Wort wird nur ein Bit für die zu übertragende Information geliefert. Bei Beginn einer wort-seriellen Übertragung, z.B. bei der Übertragung neuer Digital-Analog-Wandler-Werte zum Chip 1, wird das sog. SYNC-Bit im 8-Bit-Wort gesetzt. Daran erkennt der Chip 1, daß das erste Bit einer hyper-seriell übertragenen Botschaft, in diesem Fall also der neuen Digital-Analog-Wandler-Werte, übertragen wird. Mit jedem 8-Bit-Wort wird dann je ein Bit für jeden der vier Digital-Analog-Wandler-Werte übertragen. Die Anzahl der Bits einer Botschaft liegt entweder fest, kann zu Beginn jeder Botschaft mit übertragen werden oder wird durch die Dauer von SYNC bestimmt. Da die Geschwindigkeit der Übertragung bei Magneto-Kopplem zur Zeit bis 100 Mbit/s betragen kann, kann damit eine Übertragungsrate von ca. 10 Mbit/s je I/O-Pin erreicht werden.

### Der Datenstrom zum Schnittstellenschaltkreis-Chip:

| Bit | Name | Bedeutung | |
|---|---|---|---|
| 0 | PINA | Daten für I/O-Pin A, Bedeutung je nach Betriebsart des Pins | |
| 1 | PINB | Daten für I/O-Pin B, Bedeutung je nach Betriebsart des Pins | |
| 2 | PINC | Daten für I/O-Pin C, Bedeutung je nach Betriebsart des Pins | |
| 3 | PIND | Daten für I/O-Pin D, Bedeutung je nach Betriebsart des Pins | |
| 4 | SYNC | 1 = Beginn der Hyper-seriellen Datenübertagung | |
| 5 | RES | Reset: | 0 = alle I/O-Pins hochohmige Eingänge |
| | | | 1= alle I/O-Pins wie bei Initialisierung gesetzt |
| 6 | DATA | Hyper-serieller Datenkanal für diverse Informationen | |
| 7 | PARITY | Parity über Bit 0..6 | |

### Der hyper-serielle Befehlssatz zum Schnittstellenschaltkreis-Chip

Nach Power-On sind alle Bits für alle I/O-Pins = 0 gesetzt, die I/O-Pins sind dann hochohmige Eingänge. Die Konfiguration der I/O-Pins geschieht hyper-seriell wie folgt:

Das erste der zur Inititialisierung übertragenen 8-Bit-Wörter nach Power-On-Reset (oder nachdem das RES-Bit wieder auf 1 gegangen ist) legt die Betriebsart der seriellen Datenübertragung fest. Danach folgt die Initialisierung der Betriebsart/en für die 4 Pins, wobei die Bits 3..0 je Wort hyper-seriell die Betriebsart für die I/O-Pins 3..0 enthalten, beginnend mit dem höchstwertigen Bit der Inititialisierung im ersten übertragenen 8-Bit-Wort. Zu Beginn der Initialisierungswerte ist auch das SYNC-Bit gesetzt. Anschließend folgt die hyper-serielle Übertragung der Initialisierungswerte für die 4 Digital-Analog-Wandler.
Diese Einstellungen werden aber erst aktiv, wenn Bit 5 = 1 (= RES) gesetzt wird. Wird Bit 5 in einem späteren Wort = 0 gesetzt, werden alle I/O-Pins wieder in Mode 0 gesetzt und die Initialisierung der Modes muß wiederholt werden.

### Der Datenstrom vom Schnittstellenschaltkreis-Chip

| Bit | Name | Bedeutung |
|---|---|---|
| 0 | COMP0 | Ausgang von Komparator 13, 14 bzw. Hysterese-Logik 15 von I/O-Pin A |
| 1 | COMP1 | Ausgang von Komparator 23, 24 bzw. Hysterese-Logik 25 von I/O-Pin B |
| 2 | COMP2 | Ausgang von Komparator bzw. Hysterese-Logik von I/O-Pin C |
| 3 | COMP3 | Ausgang von Komparator bzw. Hysterese-Logik von I/O-Pin D |
| 4 | SYNC | 1 = Beginn der INFO bzw. einer Fehlermeldung |
| 5 | ERROR | Hyper-Serieller Datenkanal für Fehlermeldung |
| 6 | INFO | Hyper-Serieller Datenkanal für Info |
| 7 | PARITY | Parity über Bit 0..6 |

Bit 5 und 6 liefem je einen Hyper-seriellen Datenstrom. Bit 5 liefert eine Fehlermeldung bzw. 0, Bit 6 besteht aus diversen Informationen, z.B. Chip-Version und Revision, Hersteller, konfigurierte Modes, etc. Der Beginn der Übertragung wird mit SYNC = 1 eingeleitet, dann folgen die Daten, beginnend mit dem höchstwertigen Bit in fest vorgegebenem Format, abhängig vom jeweiligen Chip 1.

Wenn im Chip 1 ein Fehler entdeckt wird, wird das entsprechende Bit in der in Bit 5 hyper-seriell übertragenen Fehlerinformation gesetzt. Die Fehlermeldung wird solange wiederholt, bis kein Fehler mehr entdeckt wird.

| **Aufbau der Hyper-seriellen Fehlermeldung** (Beispiel) | |
|---|---|
| Bit | Bedeutung |
| 0 | Parity-Error bei Empfang aufgetreten |
| 1 | Übertemperatur im Chip 1 |
| 2 | Kurzzeitiges Absinken einer Versorgungsspannung (Brown-Out) aufgetreten, siehe Bit 3..5 |
| 3 | Versorgungsspannung P3 bzw. P5 fehlerhaft |
| 4 | Versorgungsspannung P 12 bzw. P15 fehlerhaft |
| 5 | Versorgungsspannung M12 bzw. M15 fehlerhaft |
| 6 | Pin A: Überstrom an Ausgang bzw. Überspannung an Eingang |
| 7 | Pin B: Überstrom an Ausgang bzw. Überspannung an Eingang |
| 8 | Pin C: Überstrom an Ausgang bzw. Überspannung an Eingang |
| 9 | Pin D: Überstrom an Ausgang bzw. Überspannung an Eingang |
| 10 | Chip 1 defekt |
| 11 | Reserviert |
| 12 | Reserviert |

### Start-Bedingung, Power-On

Im Power-Off Mode ist der DC/DC-Wandler 4 abgeschaltet, der Chip 1 erhält also noch keine Energieversorgung. Der Kommunikations-Pin OUT vom Chip 1 zum FPGA 3 zeigt das mit Low-Pegel an. Nach dem Einschalten des DC/DC-Wandlers 4 und damit der Stromversorgung für den Chip 1 erkennt der Chip 1 die Power-Good-Situation (= alle Versorgungsspannungen im Soll-Bereich), führt ein Power-On-Reset durch und zeigt dem FPGA 3 seine Bereitschaft zur Kommunikation durch einen High-Pegel am Kommunikations-Pin OUT an. Die ersten Aktivitäten über die Kommunikations-Pins IN und OUT werden verwendet, um Timing-Informationen auszutauschen und die serielle Schnittstelle zu initialisieren (Typ der Kommunikation, Baudrate, etc.). Bis zu diesem Zeitpunkt bleiben die I/O-Pins noch hochohmige Eingänge.

Nun kann das FPGA 3 mit der Kommunikation beginnen und sendet diverse Initialisierungsdaten. Die I/O-Pins werden sofort konfiguriert und bei Ausgängen auf die Initialisierungswerte gesetzt.

Hier zeigt sich ein weiterer Vorteil dieser Anordnung, weil nicht für jeden Chip 1 eine eigene, lokale Initialisierung mit eigenem EEPROM erforderlich ist, sondern das für alle Chips 1 vom FPGA 4 mit einem EEPROM für alle Initialisierungswerte aus erfolgen kann.

Wenn die Datenübertragung ausfällt, fällt der Chip 1 nach einer bestimmten Zeit wieder in den Reset-Mode, ebenso wenn der DC/DC-Wandler 4 ausfällt oder eine der Versorgungsspannungen ausfällt.

| Zustand, Phase | DC/DC-Wandler | Datenübertragung (synchron IN, OUT) | I/O-Pins |
|---|---|---|---|
| Power-Off | inaktiv | keine, IN=O, OUT=0 | hochohmig |
| Power-Not-Good | aktiv | keine, IN=O, OUT=0 | hochohmig |
| Power-Good | aktiv | keine, IN=O, OUT=0 | hochohmige |
| Power-On-Delay | aktiv | keine, IN=O, OUT=1 | hochohmig |
| CLK-Init | aktiv | Timing-evaluation | hochohmig |
| COM-Init | aktiv | Init Typ und Baudrate | hochohmig |
| I/O-Init | aktiv | bidirektional | aktiv |
| Aktiv | aktiv | bidirektional | aktiv |
| Power-Down | aktiv | keine, IN=0, OUT=0 | aktiv |
| Passiv | aktiv | keine, FPGA fällt aus OUT-Pin = High | hochohmig |
| Defekt | inaktiv | OUT-Pin = Low | hochohmig |

In der Phase I/O-Init setzen die ersten vier übertragenen 8-Bit-Wörter die Betriebsart der vier I/O-Pins und den Init-Zustand der digitalen Ausgänge. Danach folgt mit SYNC = 1 der Beginn der hyper-seriell übertragenen DA-Werte. Mit dem nächsten 8-Bit-Wort werden durch RES = 1 die zuvor gesetzten Werte für die Modes, Digital-Analog-Wandler und digitalen Ausgänge aktiviert, womit der Chip 1 aktiv ist. Das RES-Bit bleibt immer gesetzt, bis ein Reset erforderlich werden sollte.

### Beispiel für I/O-Initialisierung

Je nach Mode wird entweder je Byte nur ein Bit übertragen oder es wird mit SYNC = 1 der nächste bzw. die nächsten Digital-Analog-Wandler-Werte übertragen.

| 7 | 6 | 5 | 4 | 3 | 2 | 1 | 0 | Bit-Nr |
|---|---|---|---|---|---|---|---|---|
| PAR | INFO | RES | SYNC | PIN D | PIN C | PIN B | PIN A | Funktion |
| P | 0 | 0 | 1 | MODD3 | MODC3 | MODB3 | MODA3 | Init Mode Bit 3 |
| P | 0 | 0 | 0 | MODD2 | MODC2 | MODB2 | MODA2 | Init Mode Bit 2 |
| P | 0 | 0 | 0 | MODD1 | MODC1 | MODB1 | MODA1 | Init Mode Bit 1 |
| P | 0 | 0 | 0 | MODD0 | MODC0 | MODBO | MODAO | Init Mode Bit 0 |
| P | 0 | 0 | 0 | PIND | PINC | PINB | PINA | Init Digitale Ausgänge |
| P | 0 | 0 | 1 | DAD11 | DAC11 | DA111 | DA011 | Init DACs Bit 11 |
| P | 0 | 0 | 0 | DAD10 | DA210 | DA110 | DA010 | Init DACs Bit 10 |
| P | 0 | 0 | 0 | DAD9 | DA29 | DA19 | DA09 | Init DACs Bit 9 |
| P | 0 | 0 | 0 | DAD8 | DA28 | DA18 | DA08 | Init DACs Bit 8 |
| P | 0 | 0 | 0 | DAD7 | DA27 | DA17 | DA07 | Init DACs Bit 7 |
| P | 0 | 0 | 0 | DAD6 | DA26 | DA16 | DA06 | Init DACs Bit 6 |
| P | 0 | 0 | 0 | DAD5 | DA25 | DA15 | DA05 | Init DACs Bit 5 |
| P | 0 | 0 | 0 | DAD4 | DA24 | DA14 | DA04 | Init DACs Bit 4 |
| P | 0 | 0 | 0 | DAD3 | DA23 | DA13 | DA03 | Init DACs Bit 3 |
| P | 0 | 0 | 0 | DAD2 | DA22 | DA12 | DA02 | Init DACs Bit 2 |
| P | 0 | 0 | 0 | DAD1 | DA21 | DA11 | DA01 | Init DACs Bit 1 |
| P | 0 | 0 | 0 | DAD0 | DA20 | DA10 | DA00 | Init DACs Bit 0 |
| P | 0 | 1 | 1 | DAD11 | DA211 | DA111 | DA011 | DAC-Werte Bit11 |
| P | 0 | 1 | 0 | DAD10 | DA210 | DA110 | DA010 | DAC-Werte Bit10 |

### Die I/O-Pins

Sie sind entsprechend den Anforderungen Überspannungs- und Kurzschlußfest. Je nach Fertigungsprozeß des Chips 1 werden die üblichen Prozeß-I/O-Normen eingehalten, möglichst ohne spezielle externe Beschaltung

**Der I/O-Pin CLKi** ist standardmäßig nicht erforderlich, weil - wie oben erwähnt - der Takt in den übertragenen Daten enthalten ist und mit bekannten Standardverfahren und -Codierungen, z.B. der sog. Manchester-Codierung auf der Empfängerseite, hier also dem Block extrahiert werden kann.

Der I/O-Pin CLKi ist daher für solche Betriebsarten vorgesehen, bei denen ein externer Takt erforderlich ist, also beispielsweise bei asynchroner Betriebsart, bei der der Takt nicht aus dem Datenstrom extrahiert werden kann. Bei der bevorzugten synchronen Betriebsart ist er nicht erforderlich und wird daher zur Einstellung der Konfiguration verwendet (an GND, V5 oder n.c.).

Der I/O-Pin Uref muß über einen Kondensator an GND gelegt werden. Er kann auch verwendet werden, um die on-board Referenzspannung durch eine externe Referenz zu ersetzen.

| | | | | |
|---|---|---|---|---|
| W1 | O | 1 | 10 | A |
| W0 | O | | | B |
| W2 | O | | | C |
| SDI | O | | | D |
| SDO | O | | | GND |
| C5 | O | | | V5 |
| CP | O | | | VP |
| CM | O | | | VM |
| GND | O | | | GND |
| CLKi | O | 10 | 11 | Uref |

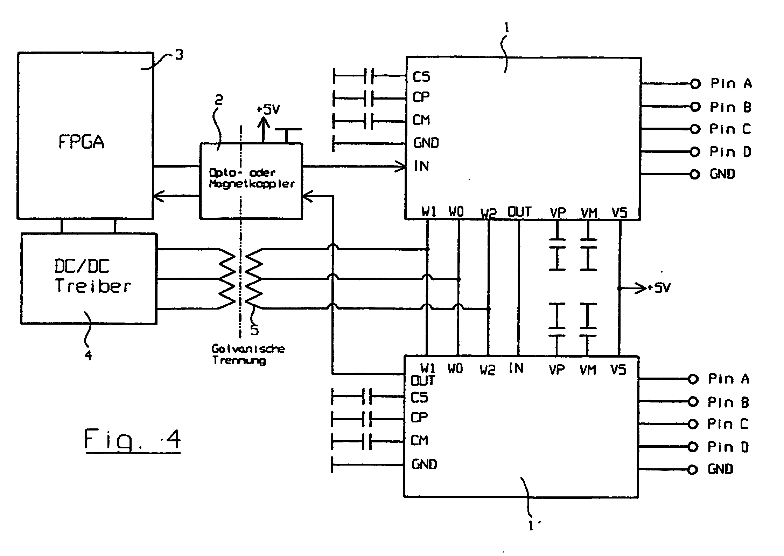

### Kaskadierung des Schnittstellenschaltkreis-Chips (siehe Fig. 4)

Mehrere Chips 1, 1' können an derselben galvanischen Trennung 2 und demselben Kommunikationskanal betrieben werden. Hierzu muß lediglich Data-OUT des ersten Chips 1 mit Data-IN des nächsten 1' verbunden werden. Die Erkennung der Reihenfolge in den Chips 1 wird über das erste 8-Bit nach Power-On-Reset gemacht. Wenn darin CASC = 1 ist, handelt es sich um den primären Chip 1, beim sekundären 1' ist CASC = 0. Die seriellen Daten werden in der Reihenfolge der Chips 1 übertragen, also in Richtung Chips 1 zunächst das 8-Bit-Wort für den primären Chip 1, dann das für den nächsten, etc.

### Betriebsart der seriellen Schnittstelle einstellen

Um weitere Einsatzmöglichkeiten für die Chips 1 zu ermöglichen, kann die Methode der seriellen Datenübertragung einstellbar gemacht werden, z.B. synchron, asynchron oder SPI.

Damit besteht die Möglichkeit, den Chip 1 an die üblichen seriellen Schnittstellen und an die bei vielen Mikro-Controllern und DSPs (= Digitale Signal-Prozessoren) vorgesehene SPI-Schnittstelle anzuschließen. Die Ansteuerung kann auch asynchron per Software erfolgen.

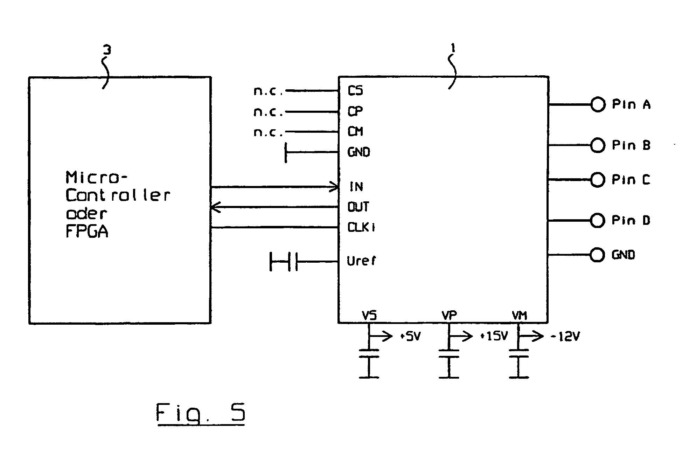

### Betrieb ohne galvanische Trennung (siehe Fig. 5)

Ein Chip 1 kann auch ohne galvanische Trennung (einzeln oder kaskadiert) betrieben werden, um Kosten zu senken. Fig. 5 zeigt den sehr einfachen Systemaufbau, wobei die Kommunikationsschnittstelle hier asynchron bzw. als SPI konfiguriert wird. Insbesondere moderne Mikrocontroller verfügen oft bereits über solche seriellen Schnittstellen.

## Patentansprüche

1. Schnittstellen-Schaltkreis (1) für Prozeßankopplungen an Computer mit folgenden Merkmalen:
Der Schnittstellen-Schaltkreis (1) hat:
- mindestens einen bidirektionalen Eingangsanschluß (Pin A-D),
- mindestens einen bidirektionalen Ausgangsanschluß (IN, OUT), der mit einem Logikschaltkreis (3) verbunden ist,
- eine Vielzahl von durch Signale (K1...K4) steuerbaren Schaltern (17, 40, 38, 43, 39), deren Eingang mittelbar oder unmittelbar mit dem mindestens einen Eingangsanschluß (Pin A-D) verbunden ist,
- mehrere Bausteine, nämlich durch Signale (K3...K7) steuerbare Multiplexer (11, 12, 21, 22), **dadurch gekennzeichnet, daß** der Schnittstellen-Schaltkreis zusätzlich
- mindestens einen Analog-Komparator (13, 14; 23, 24) und
- mindestens einen Digital-/Analog-Wandler (19, 29) umfasst,
wobei je nach Zustand der Signale (K1 bis K11) die Bausteine aktiviert, deaktiviert oder in unterschiedliche Betriebs- oder Schaltzustände versetzbar sind, womit dem mindestens einen bidirektionalen Eingangsanschluß (Pin A-D) unterschiedliche analoge oder digitale Funktionen zuweisbar sind.

2. Schnittstellen-Schaltkreis nach Anspruch 1, **dadurch gekennzeichnet, daß** der mindestens eine bidirektionale Ausgangsanschluß (IN, OUT) über eine galvanische Trennung (5) mit dem Logikschaltkreis (3) verbunden ist.

3. Schnittstellen-Schaltkreis nach Anspruch 1 oder 2, **dadurch gekennzeichnet,**
**daß** die Multiplexer (12, 22) bidirektional betreibbar sind, d.h. als Multiplexer und als Demultiplexer.

4. Schnittstellen-Schaltkreis nach Anspruch 1, **dadurch gekennzeichnet, daß** dem mindestens einen Analog-Komparator (13, 14; 23, 24) eine Sample- und Hold-Schaltung (17, 18; 40, 41) zugeordnet ist, deren Eingang mit dem mindestens einen Eingangsanschluß (Pin A-D) verbunden ist.

5. Schnittstellen-Schaltkreis nach Anspruch 4, **dadurch gekennzeichnet, daß** der mindestens eine Analog-/Digital-Wandler nach dem Prinzip der sukzessiven Approximation arbeitet.

6. Schnittstellen-Schaltkreis nach Anspruch 1, **dadurch gekennzeichnet, daß** zwischen den mindestens einen Eingangsanschluß (Pin A-D) und den mindestens einen Analog-Komparator (13, 14; 23, 24) ein Strom-/Spannungs-Wandler (31, 32) zwischengeschaltet ist, wobei die Verbindung durch den Multiplexer (12, 22) schaltbar ist.

7. Schnittstellen-Schaltkreis nach Anspruch 1, **dadurch gekennzeichnet, daß** dem mindestens einen Analog-Komparator (13, 14; 23, 24) eine steuerbare Hysterese-Schaltung (15, 25) nachgeschaltet ist.

8. Schnittstellen-Schaltkreis nach Anspruch 1, **dadurch gekennzeichnet, daß** in Signalrichtung vom Ausgangsanschluß (IN) zum mindestens einen Eingangsanschluß (Pin A-D) ein Digital-/Analog-Wandler (19, 29) geschaltet ist, wobei die Verbindung durch den Multiplexer (12, 22) steuerbar schaltbar ist.

9. Schnittstellen-Schaltkreis nach Anspruch 1 mit mindestens zwei Eingangsanschlüssen (Pin A und B, Pin C und D), die über einen Meßwiderstand (37) und einen steuerbaren Schalter (38) miteinander verbunden sind, wobei beide Anschlüsse des Meßwiderstandes (37) mit einem Differenzverstärker (44) verbunden sind, dessen Ausgang mit dem mindestens einen Analog-/Digital-Wandler (23, 24) verbunden ist.

10. Schnittstellen-Schaltkreis nach einem der Ansprüche 1 bis 9, **dadurch gekennzeichnet,**
**daß** mehrere Schnittstellen-Schaltkreise in Kaskade geschaltet und mit dem Logikschaltkreis (3) verbunden sind.

11. Schnittstellen-Schaltkreis nach einem der Ansprüche 1 bis 10, **dadurch gekennzeichnet,**
**daß** zwischen dem Schnittstellen-Schaltkreis (1) und dem Logikschaltkreis (3) eine galvanische Trennung (2) geschaltet ist, vorzugsweise ein Opto-Koppler.

12. Schnittstellen-Schaltkreis nach einem der Ansprüche 1 bis 11, **dadurch gekennzeichnet,**
**daß** höhere Funktionen, insbesondere Systemfunktionen in dem Logikschaltkreis implementiert sind, während in dem Schnittstellen-Schaltkreis (1) nur niedrigere Funktionen implementiert sind.

13. Schnittstellen-Schaltkreis nach Anspruch 12, **dadurch gekennzeichnet,**
**daß** der Logikschaltkreis (3) und der Schnittstellen-Schaltkreis (1) so aufgebaut sind, daß eine bidirektionale serielle Kommunikation zwischen ihnen stattfindet.

## Claims

1. Interface circuit (1) for process connections to computers with the following features:
The interface circuit (1) comprises:
- at least one bidirectional input connection (Pin A-D),
- at least one bidirectional output connection (IN, OUT), which is connected to a logic circuit (3),
- a plurality of switches (17, 40, 38, 43, 39), which can be controlled by signals (K1...K4), whose inputs are connected directly or indirectly to at least one input connection (Pin A-D),
- several components, namely multiplexers (11, 12, 21, 22), which can be controlled by signals (K3...K7),
**characterized in that** the interface circuit comprises additionally
- at least one analog comparator (13, 14; 23, 24), and
- at least one digital/analog converter (19, 29), wherein according to the state of the signals (K1 to K11) the components are activated, deactivated, or changeable into different operating or switching states, with different analog or digital functions being assignable to the one or more bidirectional input connections (Pin A-D).

2. Interface circuit according to Claim 1, **characterized in that** the one or more bidirectional output connections (IN, OUT) are connected over a decoupling device (5) to the logic circuit (3).

3. Interface circuit according to Claim 1 or 2, **character** **ized in that** the multiplexers (12, 22) can be operated bidirectionally, i.e., as multiplexers and as demultiplexers.

4. Interface circuit according to Claim 1, **characterized in that** the one or more analog comparators (13, 14; 23, 24) are associated with a sample-and-hold circuit (17, 18; 40, 41), whose input is connected to at least one input connection (Pin A-D).

5. Interface circuit according to Claim 4, **characterized in that** one or more analog/digital converters operate according to the principle of successive approximation.

6. Interface circuit according to Claim 1, **characterized in that** between the one or more input connections (Pin A-D) and one or more analog comparators (13, 14; 23, 24) a current/voltage converter (31, 32) is connected, with the connection being switchable by the multiplexer (12, 22).

7. Interface circuit according to Claim 1, **characterized in that** one or more analog comparators (13, 14; 23, 24) are connected after the controllable hysteresis circuit (15, 25).

8. Interface circuit according to Claim 1, **characterized in that** a digital/analog converter (19, 29) is connected in the signal direction from the output connection (IN) to one or more input connections (Pin A-D), with the connection being switchable in a controlled way by the multiplexer (12, 22).

9. Interface circuit according to Claim 1 with at least two input connections (Pin A and B, Pin C and D), which are connected to each other over a measurement resistor (37) and a controllable switch (38), with both connections of the measurement resistor (37) being connected to a differential amplifier (44), whose output is connected to one or more analog/digital converters (23, 24).

10. Interface circuit according to one of Claims 1 to 9, **characterized in that** several interface circuits are connected in a cascade arrangement and connected to the logic circuit (3).

11. Interface circuit according to one of Claims 1 to 10, **characterized in that** a decoupling device (2), preferably an optocoupler, is connected between the interface circuit (1) and the logic circuit (3).

12. Interface circuit according to one of Claims 1 to 11, **characterized in that** higher functions, particularly system functions, are implemented in the logic circuit, while only lower functions are implemented in the interface circuit (1).

13. Interface circuit according to Claim 12, **characterized in that** the logic circuit (3) and the interface circuit (1) are configured such that bidirectional serial communications takes place between these circuits.

## Revendications

1. Circuit d'interface (1) pour former l'interface d'un processus vis-à-vis d'un ordinateur, présentant les caractéristiques suivantes :
le circuit d'interface (1) possède :
- au moins une connexion d'entrée bidirectionnelle (broches A-D),
- au moins une connexion de sortie bidirectionnelle (IN, OUT), qui est reliée à un circuit logique (3),
- un grand nombre de commutateurs (17, 40, 38, 43, 39) qui sont pilotables par des signaux (K1...K4) et dont l'entrée est directement ou indirectement reliée à ladite au moins une connexion d'entrée (broches A-D),
- plusieurs éléments, à savoir des multiplexeurs (11, 12, 21, 22) pilotables par des signaux (K3...K7),
**caractérisé en ce que** le circuit d'interface comprend en outre :
- au moins un comparateur analogique (13, 14 ; 23, 24) et
- au moins un convertisseur numérique-analogique (19, 29), de sorte que les éléments sont, en fonction de l'état des signaux (K1 à K11), activés, désactivés ou transposables dans différents états de fonctionnement ou de commutation, au moyen de quoi différentes fonctions analogiques ou numériques sont assignables à ladite au moins une connexion d'entrée bidirectionnelle (broches A-D).

2. Circuit d'interface selon la revendication 1, **caractérisé en ce que**
ladite au moins une connexion de sortie bidirectionnelle (IN, OUT) est reliée au circuit logique (3) par une isolation galvanique (5).

3. Circuit d'interface selon la revendication 1 ou 2,
**caractérisé en ce que**
les multiplexeurs (12, 22) sont exploitables de manière bidirectionnelle, c'est-à-dire comme multiplexeurs et comme démultiplexeurs.

4. Circuit d'interface selon la revendication 1, **caractérisé en ce que**
audit au moins un comparateur analogique (13, 14 ; 23, 24) est affecté un circuit échantillonneur-bloqueur (17, 18 ; 40, 41), dont l'entrée est reliée à ladite au moins une connexion d'entrée (broches A-D).

5. Circuit d'interface selon la revendication 4, **caractérisé en ce que**
ledit au moins un convertisseur analogique-numérique travaille selon le principe de l'approximation successive.

6. Circuit d'interface selon la revendication 1, **caractérisé en ce que**
entre ladite au moins une connexion d'entrée (broches A-D) et ledit au moins un comparateur analogique (13, 14 ; 23, 24) est intercalé un convertisseur courant-tension (31, 32), de sorte que la liaison par le multiplexeur (12, 22) est commutable.

7. Circuit d'interface selon la revendication 1, **caractérisé en ce que**
en aval dudit au moins un comparateur analogique (13, 14 ; 23, 24) est monté un circuit à hystérésis (15, 25).

8. Circuit d'interface selon la revendication 1, **caractérisé en ce que**
dans la direction du signal à partir de la connexion de sortie (IN) vers ladite au moins une connexion d'entrée (broches A-D) est monté un convertisseur numérique-analogique (19, 29), de sorte que la liaison par le multiplexeur (12, 22) est commutable de façon pilotable.

9. Circuit d'interface selon la revendication 1 avec au moins deux connexions d'entrée (broches A et B, broches C et D), qui sont reliées entre elles par une résistance de mesure (37) et un commutateur pilotable (38), les deux connexions de la résistance de mesure (37) étant reliées à un amplificateur différentiel (44) dont la sortie est reliée audit au moins un convertisseur analogique-numérique (23, 24).

10. Circuit d'interface selon l'une des revendications 1 à 9,
**caractérisé en ce que**
plusieurs circuits d'interface sont montés en cascade et reliés au circuit logique (3).

11. Circuit d'interface selon l'une des revendications 1 à 10,
**caractérisé en ce que**
entre le circuit d'interface (1) et le circuit logique (3) est montée une isolation galvanique (2), de préférence un coupleur optoélectronique.

12. Circuit d'interface selon l'une des revendications 1 à 11,
**caractérisé en ce que**
des fonctions supérieures, notamment des fonctions système, sont implémentées dans le circuit logique, tandis que dans le circuit d'interface (1) ne sont implémentées que des fonctions inférieures.

13. Circuit d'interface selon la revendication 12, **caractérisé en ce que**
le circuit logique (3) et le circuit d'interface (1) sont construits de telle manière qu'une communication sérielle bidirectionnelle a lieu entre eux.
